Europäisches Patentamt

(19) European Patent Office   (11) Numéro de publication: **0 030 481**

Office européen des brevets   **B1**

(12)   **FASCICULE DE BREVET EUROPEEN**

(45) Date de publication du fascicule du brevet: **02.05.85**   (51) Int. Cl.⁴: **A 21 C 5/00,** G 01 F 11/24, A 21 C 1/14, A 21 C 1/04

(21) Numéro de dépôt: **80401399.3**

(22) Date de dépôt: **02.10.80**

(54) **Peseuse de matière en pâte, telle que la pâte à pain et pétrin-malaxeur-peseur équipé d'une telle peseuse.**

(30) Priorité: **03.10.79 FR 7925024**
**18.04.80 FR 8008955**
**30.06.80 FR 8014698**

(43) Date de publication de la demande:
**17.06.81 Bulletin 81/24**

(45) Mention de la délivrance du brevet:
**02.05.85 Bulletin 85/18**

(84) Etats contractants désignés:
**AT BE CH DE FR GB IT LI LU NL**

(56) Documents cités:
**DE-C- 245 931**
**FR-A- 438 652**
**FR-A-1 374 120**
**FR-A-1 541 754**
**FR-A-2 422 151**
**US-A-3 481 283**

(73) Titulaire: **Halley, Louis Ernest Armand**
**62 bis route de Duclair**
**F-76380 Canteleu, Seine-Maritime (FR)**

(72) Inventeur: **Halley, Louis Ernest Armand**
**62 bis route de Duclair**
**F-76380 Canteleu, Seine-Maritime (FR)**

(74) Mandataire: **Lepeudry-Gautherat, Thérèse et al**
**Cabinet Armengaud Jeune Casanova, Akerman,**
**Lepeudry 23 boulevard de Strasbourg**
**F-75010 Paris (FR)**

Courier Press, Leamington Spa, England.

EP 0 030 481 B1

## Description

La présente invention concerne un pétrin-malaxeur-peseur et une peseuse de matière en pâte, notamment de pâte à pain.

Actuellement, la fabrication du pain comprend une opération de pétrissage effectuée dans des pétrins mécaniques comprenant une cuve tournante dans laquelle tourne un bras de malaxage. Lorsque la pâte a été formée convenablement, elle hest soit mise à la main sous forme de "pâtons", c'est-à-dire de masses destinées à former chacune un pain, par un ouvrier boulanger, soit transvasée dans des cuves destinées à alimenter différents types de peseuses à fonctionnement alternatif. Un premier type de peseuses connues destinées à mettre la pâte sous forme de masses de volume voulu, comporte des pistons destinés à prélever la masse voulue de pâte, puis à l'évacuer sur un dispositif convenable tel qu'un tapis transporteur.

Les peseuses connues de type alternatif présentent des inconvénients de deux sortes. D'abord, les mécanismes alternatifs ne se prêtent pas à un nettoyage facile et la fiabilité du fonctionnement n'est pas très élevée: Les opérations de nettoyage sont toujours longues et délicates.

Un second type de peseuses connues est illustré par le document US—A—3,481,283: les peseuses rotatives comportent un rotor pourvu de cavités qui communiquent, lors d'une rotation alternativement avec une alimentation en pâte et avec un orifice de distribution d'une dose de pâte déterminée par le volume de la cavité. L'alimentation et la distribution sont assistées par respectivement une dépression et une surpression créée dans la cavité au travers de sa paroi poreuse. Ce type connu de peseuses est d'une mécanique relativement complexe et non susceptible de subir des modifications de manière simple, notamment pour former des doses de volume variable.

D'autre part, il n'existe pas actuellement de peseuse montée directement sur un pétrin, bien qu'une machine effectuant à la fois le pétrissage et le pesage présente des intérêts évidents dans la boulangerie.

L'invention concerne ce deuxième type de peseuse et un pètrin malaxeur peseur simplifié par rapport au dispositif connu dans le sens qu'il permet un changement rapide de la dimension des doses formées. Cette facilité résulte de la conception simple de la peseuse qui ne nécessite pour opérer ce changement que le simple desserrage d'un boulon ou d'un écrou, l'enlèvement du rotor et son remplacement par un autre rotor, puis le serrage du boulon ou de l'écrou. Etant donné le volume déterminé de la cavité, toutes les masses formées sont identiques et très reproductibles.

Plus précisément, l'invention concerne une peseuse destinée à débiter une matière en pâte en masses de même grandeur, cette peseuse comportant:

— un rotor monté sur un arbre et ayant une surface de révolution dans laquelle débouche au moins une cavité de volume correspondant au volume voulu pour chaque masse,
— un dispositif d'entraînement destiné à faire tourner le rotor autour de l'axe de révolution de l'arbre susdit,
— un distributeur de pâte, ayant un orifice de distribution adjacent à la surface de révolution du rotor et placé de manière que, à chaque tour du rotor, ladite cavité communique avec l'orifice de distribution, ledit rotor comprenant au moins un canal radial de passage d'un gaz sous pression en direction de la cavité afin que la masse contenue dans ladite cavité soit éjetée.

Selon l'invention, le rotor se compose d'un corps pourvu de la cavité susdite et monté de manière amovible sur l'arbre susdit, ledit canal radial étant ménagé dans ledit corps et débouchant d'une part, dans la partie de la cavité qui est la plus éloignée de la surface de révolution et communiquant au moins séquentiellement d'autre part, avec un canal s'étendant coaxialement à l'arbre susdit.

Le corps est avantageusement monté sur l'arbre avec lequel il tourne, et l'arbre a le canal coaxial qui débouche latéralement en regard du canal radial corps. L'arbre porte de préférence une came de commande d'un dispositif destiné à transmettre le gaz comprimé dans le canal coaxial et dans le canal radial du corps.

Dans une variante, la corps tourne sur un arbre fixe qui comporte le canal coaxial qui débouche latéralement de manière que, à chaque tour du corps, ce canal coaxial communique avec le canal radial du corps.

Selon une caractéristique avantageuse, le corps est monté sur l'arbre par un dispositif de fixation rapide si bien que différents corps ayant des cavités de dimensions différentes, peuvent être rapidement montés sur l'arbre.

Il est avantageux que le peseuse comporte en outre un dispositif de transport destiné à recevoir les masses éjectées par le corps, par exemple un tapis transporteur, entraîné lorsque le corps tourne.

Le distributeur est avantageusement sous forme d'une cuve fermée qui contient la pâte et qui a une entrée de gaz comprimé, par exemple d'air comprimé, disposée de manière que le gaz qui pénètre dans la cuve chasse la pâte sous pression par l'orifice de distribution.

Il est en outre avantageux que la peseuse comporte un obturateur qui, dans une première position, permet la communication entre la cavité du corps et l'orifice de distribution et, dans une autre position, empêche cette communication.

L'invention concerne aussi un pétrin-malaxeur-peseur qui comporte une cuve fixe qui peut être fermée de manière étanche et comprend une entrée de gaz comprimé, une cuve tournante disposée dans la cuve fixe et ayant un orifice de distribution, un bras rotatif de malaxage et un dispositif d'entraînement destiné à faire tourner la cuve tournante et le bras de malaxage, indépendamment l'un de l'autre. Il comporte en outre une peseuse d'un type indiqué précédemment, et un obturateur, monté entre la peseuse et l'orifice de distribution de la cuve tournante, permet l'utilisation séparée du pétrin ou malaxeur mécanique, puis l'utilisation de la peseuse, le pétrin ou malaxeur mécanique transmettant alors la pâte sous pression.

Ainsi, le pétrin-malaxeur-peseur selon l'invention ne nécessite aucune manipulation de la pâte, les seules opérations nécessaires étant le remplissage du pétrin ou malaxeur par la farine, l'eau et les ingrédients habituels, et la commande du pétrin lui-même.

Lorsque la dimension des pains doit être modifiée, la seule opération nécessaire est un changement du corps, cette opération étant effectuée très rapidement. Etant donné le volume bien déterminé de la cavité, les pâtons formés ont un volume et une masse reproductibles jusqu'à ce que le pétrin ne contienne plus de pâte. En outre, l'appareil peut être avantageusement entièrement carrossé si bien qu'il ne présente pas de danger pour le personnel.

D'autres caractéristiques et avantages de l'invention ressortiront mieux de la description qui va suivre, faite en référence aux dessins annexés sur lesquels:

— la figure 1 est une élévation latérale avec des parties arrachées d'un pétrin-peseur selon l'invention;
— la figure 2 est une coupe suivant la ligne II—II d'une partie de l'appareil de la figure 1;
— la figure 3 est une vue en plan de l'obturateur représenté sur les figures 1 et 2;
— la figure 4 représente schématiquement la commande de l'obturateur de la figure 3; et
— la figure 5 est une coupe verticale schématique d'une variante d'appareil selon l'invention, constituant une simple peseuse.

On décrit l'invention en référence à un pétrin-peseur, formé par la combinaison d'un pétrin mécanique étanche et d'une peseuse, mais l'invention concerne aussi une peseuse. La variante décrite en référence à la figure 5 est une simple peseuse n'assurant pas de pétrissage.

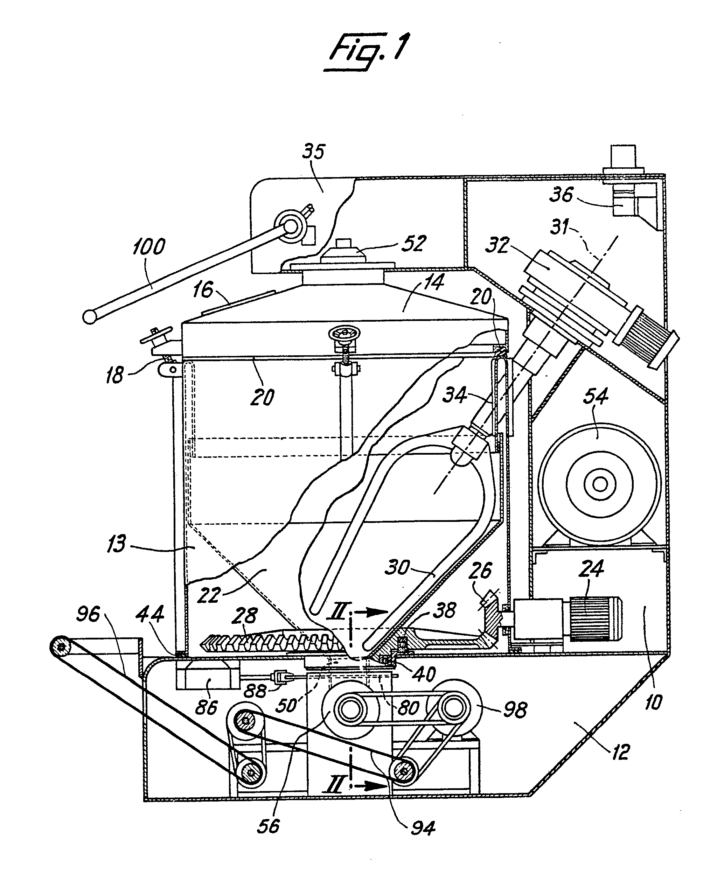

La figure 1 représente schématiquement les éléments essentiels d'un pétrin-peseur selon l'invention.

Le pétrin-peseur représenté sur la figure 1 comporte un bâti ayant une partie verticale 10 et une base 12 contenant la peseuse. La base 12 supporte la cuve fixe 13 du pétrin qui est fermée à sa partie supérieure par un couvercle 14. Celui-ci comporte un hublot 16 qui peut être fermé de manière étanche et qui permet l'observation de l'intérieur du pétrin ou le chargement du celui-ci. Des vis articulées 18 permettent le serrage du couvercle 14 contre la cuve fixe 13, avec interposition d'un joint 20.

La cuve fixe 13 contient une cuve tournante 22.

Celle-ci est entraînée en rotation par un moteur 24 qui entraîne un pignon conique 26. Celui-ci est en prise avec une couronne dentée horizontale 28 qui est solidaire de la partie inférieure de la cuve rotative 22.

Un bras 30 de malaxage est disposé dans la cuve tournante 22 et est entraîné autour d'un axe 31 incliné par rapport à la verticale, par un réducteur 32 commandé par un moteur convenable. Le réducteur entraîne un arbre qui est solidaire du bras 30 et qui traverse la paroi de la cuve fixe 13 au niveau d'un joint étanche 34.

La partie verticale 10 porte à sa partie supérieure une potence 35 qui est solidaire du couvercle 14. Un vérin 36 permet le déplacement latéral de la potence 35 afin que le couvercle 14 puisse être écarté de la cuve 13 et permette ainsi un accès facile à l'intérieur de la cuve, par exemple pour le chargement manuel.

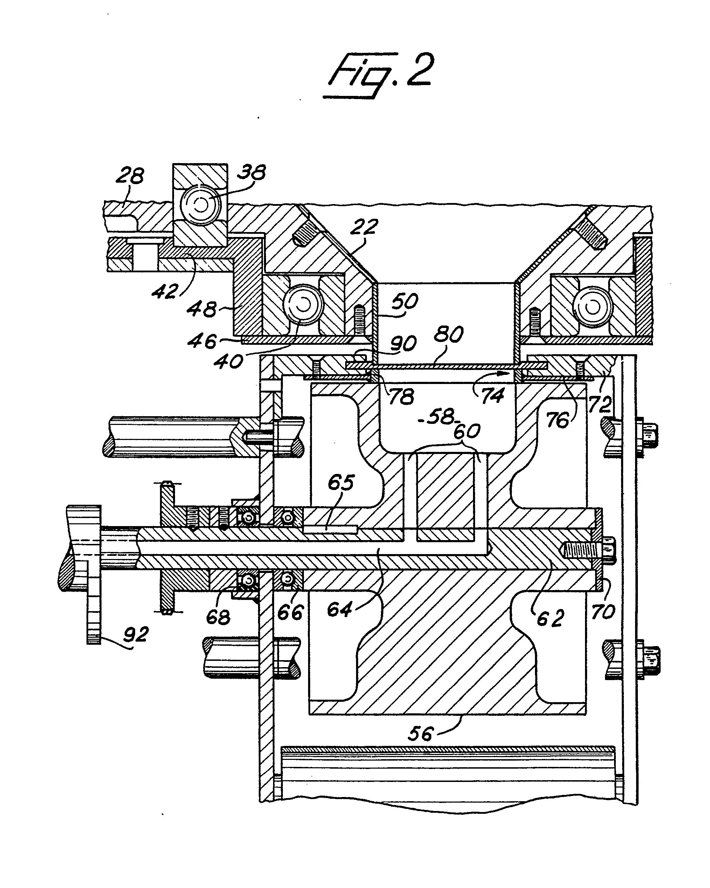

La cuve tournante 22 du pétrin est supportée par une butée 38 à billes, et est guidée dans sa rotation par un roulement à billes 40. La butée 38 prend appui contre une plaque horizontale 42 du bâti (figure 2). La cuve fixe 13 coopère de façon étanche avec cette plaque fixe 42, sur toute sa circonférence, par un joint d'étanchéité 44 (figure 1). En outre, une plaque 46 d'étanchéité, fixée sur la cuve tournante 22, assure l'étanchéité contre un flasque 48 qui dépasse de la plaque 42 du bâti. De cette manière, lorsque le couvercle 14 est fermé de manière étanche sur la cuve fixe 13, l'espace délimité à l'intérieur de la cuve 13 ne débouche que par une goulotte 50 (figure 2) qui délimite un orifice de distribution à la base de la cuve rotative 22. Le support 52 du couvercle 14 sur la potence 35 comprend une entrée d'air comprimé permettant la mise de l'intérieur de la cuve 13 sous pression. De cette manière, lorsque l'air comprimé est introduit dans la cuve, la pâte qui peut se trouver dans la cuve rotative 22 est chassée vers l'orifice de distribution formé par la goulotte 50.

La figure 1 représente en outre un compresseur 54 destiné à transmettre l'air comprimé à la cuve et, comme décrit dans la suite, à la peseuse rotative.

Le pétrin décrit jusqu'à présent se distingue des pétrins connus en ce qu'il est placé dans une enceinte étanche permettant l'éjection sous pression de la pâte formée dans la cuve tournante.

La peseuse rotative du pétrin-peseur comporte un rotor 56 ayant une surface externe de révolution. Une cavité 58 est formée dans cette surface de révolution. Des canaux 60 font communiquer le fond de cette cavité 58 avec un alésage dans lequel se loge un arbre 62 d'entraînement. Cet arbre 62 a un passage longitudinal 64 qui communique latéralement avec les canaux 60 du rotor 56.

Le rotor 56 tourne avec l'arbre 62 parce qu'il est entraîné par une clavette 65 fixée sur l'arbre 62 et glissant dans une gorge du rotor 56.

Le rotor 56 prend appui contre une butée 66 à billes lorsqu'il est repoussé par une rondelle 70 maintenue par une vis à l'extrémité libre du rotor.

Un roulement à billes 68 supporte l'arbre afin qu'il tourne autour d'un axe bien déterminé qui se confond avec l'axe de révolution du rotor 56.

La cavité 58 de la surface de révolution du rotor 56 débouche latéralement, c'est-à-dire dans la surface de révolution, par une ouverture qui passe en face de la goulotte 50 du pétrin à chaque tour du rotor. Plus précisément, une plaque 72 du bâti, disposée à proximité de la surface latérale du rotor à la partie supérieure de celui-ci, porte un raccord adaptateur 74. Celui-ci comporte une plaque 76, fixée contre la plaque 72, et une partie cylindrique 78 qui prolonge la goulotte 50, mais avec interposition d'un obturateur 80. La face inférieure de la partie cylindrique 78 est délimitée par une surface de révolution qui correspond à la surface externe de révolution du rotor 56 afin que l'espace séparant la partie cylindrique 78 du rotor soit très faible. Par contre, à sa partie supérieure, la partie cylindrique 78 se termine dans un plan parallèle au plan dans lequel se termine la partie inférieure de la goulotte 50 l'obturateur 80 peut glisser entre la partie inférieure de la goulotte 50 et la partie supérieure du raccord adaptateur 74, avec un faible jeu.

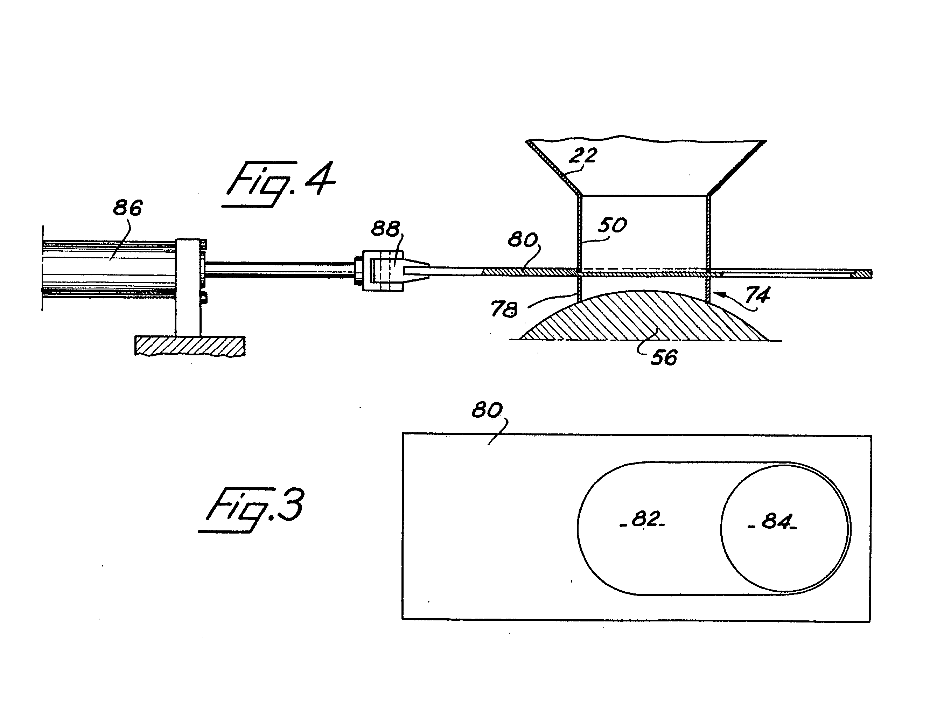

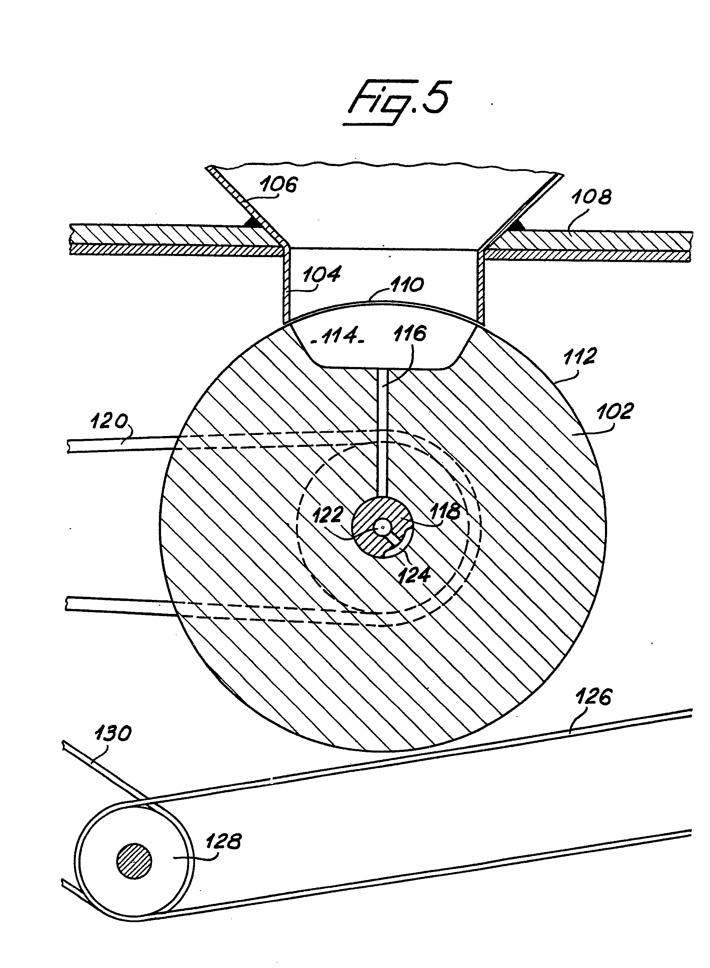

Les figures 3 et 4 représentent plus clairement la configuration de l'obturateur 80. Cet obturateur comporte une plaque de forme sensiblement rectangulaire dans laquelle est fraisé un évidement 82 qui est limité par deux côtés parallèles et deux demi-cercles. Le diamètre des demi-cercles de l'évidement est légèrement supérieur au diamètre extérieur de la goulotte 50 et de la partie cylindrique 78 du raccord 74 alors que la longueur des côtés parallèles est au moins égale au double du diamètre intérieur de la goulotte 50 et de la partie cylindrique 78. A une extrémité de l'évidement 82, un orifice 84 débouche de la plaque de l'obturateur 80. De cette manière, lorsque l'obturateur 80 est déplacé par un vérin pneumatique 86 fixé par un raccord 88, l'obturateur peut prendre deux positions extrêmes, une première position dans laquelle l'orifice 84 est aligné sur la goulotte 50 et la partie cylindrique 78, si bien que la pâte peut passer librement du pètrin à la peseuse, et une seconde position dans laquelle l'obturateur est repoussé au maximum vers la droite (sur la figure 4) si bien que la communication entre la goulotte 50 et la partie cylindrique 78 est interrompue.

Les côtés de l'obturateur 80 glissent dans des logements 90 (figure 2) de la plaque 72 qui est formée de bronze alors que l'obturateur 80 est formé d'acier inoxydable. Par contre, la goulotte 50 (comme la cuve 22) et le rotor 56 sont avantageusement formés d'acier inoxydable. Le rotor peut être formé d'un métal convenable dont les surfaces destinées à être au contact de la pâte ont été chromées.

L'arbre 62 porte en outre une came 92 destinée à commander un microcontact ou une micro-vanne à chaque tour.

Comme l'indique la figure 1, le pétrin-peseur comporte en outre un système de transport. Celui-ci comprend avantageusement des tapis transporteurs 94, 96, et l'entraînement du rotor et du système de transport est avantageusement assuré par un seul moteur 98, afin que les tapis soient toujours en fonctionnement lorsque le rotor peut y déposer des pâtons.

Comme indiqué sur la figure 1, le pétrin-peseur est entièrement carrossé et tous les dispositifs d'entraînement sont à l'intérieur si bien que la sécurité d'amploi est excellente. L'opérateur du pétrin-peseur dispose par contre de commandes 100, sous forme d'un ou plusieurs leviers et d'un tableau de commande.

On considère maintenant le fonctionnement de l'appareil décrit précédemment.

La farine, l'eau et les ingrédients nécessaires à la fabrication de la pâte sont introduits dans le pétrin, manuellement ou automatiquement, de préférence par l'intermédiaire du hublot 16. Cependant le chargement peut aussi être effectué lorsque le couvercle 14 est écarté latéralement par la potence 35 sous la commande du vérin 36.

Lorsque le chargement a été effectué et lorsque le couvercle et le hublot ont été remis en place, le couvercle 14 est fixé de manière étanche par serrage des vis 18 sur la cuve 13. Le bras malaxeur 30 est alors mis en route et la cuve 22 commence à tourner sous la commande du moteur 24, en fonction d'ordres donnés à l'aide du tableau de commande ou automatiquement, en fonction d'un programme préalablement enregistré. Le pétrissage est alors effectué de manière classique, c'est-à-dire comme dans les pétrins mécaniques connus, mais l'invention présente un avantage car le pétrissage peut être effectué en atmosphère contrôlée. Ainsi, l'entrée de gaz comprimé peut être utilisée, pendant le pétrissage, pour l'introduction d'un gaz choisi, par exemple d'oxygène ou d'air enrichien oxygène, permettant une modification des propriétés de la pâte. Lorsque le pétrissage est terminé, l'obturateur 80 qui était fermé depuis le début des opérations, est mis en position d'ouverture par le vérin 86. Jusqu'à cette ouverture, l'opérateur de la machine a pu placer le rotor 56 voulu. Lorsque l'obturateur 80 a été ouvert, la pâte descend dans la partie cylindrique 78 du raccord 74 et pénètre dans la cavité 58 du rotor à chaque tour de celui-ci. Lorsque la cavité se trouve en face de la goulotte 50, elle se remplit de pâte et, lorsque le rotor a tourné et que la cavité se rapproche du tapis transporteur 94, la came 92 montée sur l'arbre commande un microcontact qui provoque l'introduction d'air comprimé par le passage longitudinal 64 de l'arbre 62 et par les canaux 60 du rotor. De cette manière, la masse de pâte de la cavité 58 est chassée vers le tapis transporteur 94. Comme le rotor 56 continue à tourner, la cavité revient en face de la goulotte 50 et se charge à nouveau de pâte. Comme le raccord 52 du couvercle 14 du pétrin introduit de l'air comprimé à la partie supérieure de la cuve fixe 13, la pâte contenue dans la cuve rotative 22 est chassée de la goulotte 50 et remplit ainsi la cavité 58 à chaque tour jusqu'à ce qu'il ne reste plus de pâte dans la cuve.

Il faut noter que, pendant le fonctionnement de la peseuse, la cuve 22 d'une part et le bras 30 de malaxage d'autre part peuvent tourner ou non, à volonté ou suivant un programme préalablement établi.

Si l'opérateur souhaite que la machine forme des pâtons de dimension différente, il commande la fermeture de l'obturateur 80 par le vérin 86 et peut alors changer de rotor 56. Lorsque l'opération est effectuée, l'ouverture de l'obturateur 80 par le vérin 86 permet la formation de pâtons de masses différentes.

On considère maintenant, en référence à la figure 5, une variante de l'appareil selon l'invention, sous forme d'une peseuse. La peseuse comporte un rotor 102, analogue au rotor 56 représenté sur les figures 1 et 2. Ce rotor tourne au-dessous d'une goulotte 104 qui forme la partie inférieure d'une cuve 106 (représentée en partie seulement) qui contient une pâte sous pression. La cuve 106 est fixe et elle est portée par une plaque 108 du bâti. La goulotte 104 est limitée à sa partie inférieure par une surface correspondant à la surface de révolution 112 du rotor 102 de manière que l'espace séparant les surfaces 110 et 112 soit aussi faible que possible. Le rotor 102 comporte au moins une cavité 114. Bien qu'on n'ait représenté qu'une seule cavité 114, le rotor 102 peut en comporter avantageusement plusieurs, par exemple quatre ou cinq. Un canal 116 débouche au fond de la cavité 114 et dans un alésage qui loge l'arbre 118 autour duquel tourne le rotor 102. Dans ce mode de réalisation, l'arbre 118 est fixe et le rotor 102 est entraîné en rotation par une courroie 120. L'arbre 118 a un passage longitudinal 122 qui transmet de l'air comprimé. Celui-ci parvient dans une rigole latérale 124. Lorsque le rotor 102 tourne, le canal 116 vient en face de la rigole 124. A ce moment, l'air comprimé transmis constamment par le passage longitudinal 122 de l'arbre passe dans le canal 116 et chasse la masse de pâte contenue par la cavité 114. Dès que le passage 116 a dépassé la rigole 124, il ne reçoit plus d'air comprimé.

Les masses sont éjectées de la cavité 114 sur un tapis transporteur 126 se déplaçant sous la commande d'un tambour 128 lui-même entraîné par une courroie 130 avantageusement déplacée par le moteur qui entraîne lui-même la courroie 120.

L'arbre fixe 118 sur lequel tourne le rotor 102 et l'arbre sur lequel tourne le tambour 128 sont avantageusement fixés par rapport au bâti dont on a représenté uniquement la plaque 108.

La figure 5 représente donc une variante de rotor qui peut être utilisée avec le mode de réalisation décrit en référence aux figures 1 à 4. Cependant, le distributeur de pâte de la figure 5 n'est pas un pétrin mais simplement une cuve 106 qui peut être mise sous pression.

La peseuse et le pétrin-peseur selon l'invention permettent un changement rapide du rotor, c'est-à-dire un changement rapide de la dimension des masses formées. Ce changement nécessite le simple desserrage d'un boulon ou d'un écrou, l'enlèvement du rotor et son remplacement par un autre rotor puis le serrage du boulon ou de l'écrou. Etant donné le volume déterminé de la cavité, toutes les masses formées sont identiques et très reproductibles.

L'ensemble de l'appareil est carrossé et présente donc une grande sécurité d'emploi. Il ne nécessite en outre aucune opération manuelle, puisqu'il fonctionne automatiquement une fois le chargement effectué.

La commande et la synchronisation des diverses opérations peuvent être réalisées de l'une des nombreuses manières bien connues des hommes du métier. Par exemple, les diverses opérations peuvent être commandées séparément à partir du tableau de commande, ou elles peuvent être au contraire entièrement commandées par un système automatisé, comprenant par exemple un microprocesseur et des mémoires. On ne décrit pas ces caractéristiques qui sont bien connues.

Bien qu'on ait décrit l'invention en référence au pétrissage et au pesage de la pâte à pain, il est bien évident qu'elle s'applique à d'autres matières en pâte qui doivent être mises en masses de volumes égaux, dans diverses opérations industrielles autres que la boulangerie.

**Revendications**

1. Peseuse destinée à débiter une matière en pâte en masses de même grandeur, ladite peseuse comportant:

— un rotor (56; 102) monté sur un arbre (62; 118) et ayant une surface de révolution dans laquelle débouche au moins une cavité (58; 114) de volume correspondant au volume voulu pour chaque masse,
— un dispositif d'entraînement destiné à faire tourner le rotor (56; 102) autour de l'axe de révolution de l'arbre (62; 118) susdit,
— un distributeur de pâte (18; 106), ayant un orifice de distribution adjacent à la surface de révolution du rotor (56; 102) et placé de manière que, à chaque tour du rotor, ladite cavité (58; 114) communique avec l'orifice de distribution, ledit rotor (56; 102) comprenant au moins un canal radial (60; 116) de passage d'un gaz sous pression en direction de la cavité afin que la masse contenue dans ladite cavité soit éjetée, caractérisée en ce que le rotor (56; 102) se compose d'un corps pourvu de la cavité (58; 114) susdite et monté de manière amovible sur l'arbre (62; 118) susdit, ledit canal radial (60; 116) étant ménagé dans ledit corps et débouchant d'une part dans la partie de la cavité qui est la plus éloignée de la surface de révolution et communiquant au moins séquentiellement d'autre part avec un canal (64; 122) s'étendant coaxialement à l'arbre susdit.

2. Peseuse selon la revendication 1, caractérisée en ce que le corps (56) susdit est calé sur l'arbre (62) susdit qui comporte le canal coaxial (64) susdit débouchant latéralement dudit arbre en regard du canal radial (60) du corps et en ce que l'arbre susdit porte une came (92) de commande d'un dispositif destiné à transmettre le gaz comprimé dans ledit canal coaxial et dans ledit canal radial.

3. Peseuse selon la revendication 1, caractérisée en ce que le corps (102) susdit est monté en rotation sur l'arbre (118) susdit qui est fixe et qui comporte le canal coaxial (122) qui débouche latéralement de manière que, à chaque tour du corps, ce canal coaxial communique avec ledit canal radial (116) du corps.

4. Peseuse selon l'une quelconque des revendications 1 à 3, caractérisée en ce qu'elle comporte un dispositif (70) de fixation rapide du corps par rapport à l'arbre (62; 118) de manière que différents corps ayant des cavités (58; 114) dimensions différentes, puissent être montés rapidement sur ledit arbre.

5. Peseuse selon l'une quelconque des revendications 1 à 4, caractérisée en ce qu'elle comporte un obturateur (80) mobile entre deux positions dans l'une desquelles il permet la communication entre la cavité (58) du corps (56) et l'orifice de distribution et dans l'autre desquelles il empêche cette communication.

6. Pétrin-malaxeur-peseur, caractérisé en ce qu'il comporte une peseuse selon la revendication 5, le distributeur de pâte étant formé par un pétrin ou malaxeur mécanique qui comporte: ·

— une cuve fixe (13) destinée à être fermée de manière étanche et comportant une entrée (52) de gaz comprimé,
— une cuve tournante (22) disposée dans la cuve fixe (13) et ayant un orifice de distribution,
— un bras rotatif (30) de malaxage, et
— un dispositif d'entraînement (24, 32) destiné à faire tourner la cuve tournante et le bras de malaxage indépendamment l'un de l'autre.

**Patentansprüche**

1. Dosiereinrichtung zum Aufteilen einer teigförmigen Masse in Mengen gleicher Größe, bestehend aus

— einem auf einer Welle (62, 118) montierten Rotor (56, 102), der eine umlaufende Fläche mit mindestens einer nach außen offenen Ausnehmung (58, 114) mit einem Volumen aufweist, das dem für jede Menge gewunschten Volumen entspricht;
— einer Antriebseinrichtung, die den Rotor (56, 102) um die Drehachse der Welle (62, 118) in Drehung versetzt;
— einer Teigausgabeeinrichtung (13, 106) mit einer Ausgabeöffnung, die angrenzend an die umlaufende Fläche des Rotors (56, 102) und so angeordnet ist, daß die Ausnehmung (58, 114) bei jeder Drehung des Rotors mit der Ausgabeöffnung in Verbindung kommt, wobei der Rotor (56, 102) mindestens einen radial verlaufenden Kanal (60, 116) aufweist, durch den ein unter Druck stehendes Gas in Richtung zu der Ausnehmung durchgelassen werden kann, damit die in der Ausnehmung befindliche Menge ausgestoßen wird; dadurch gekennzeichnet, daß der Rotor (56, 102) aus einem mit der Ausnehmung (58, 114) versehenen Körper besteht, der lösbar auf der Welle (62, 118) angeordnet ist, und daß der radiale Kanal (60, 116) in diesem Körper angeordnet ist, einerseits in den am weitesten von der umlaufenden Fläche entfernten Teil der Ausnehmung mündet und andererseits mindestens abschnittsweise mit einem Kanal (64, 122) in Verbindung steht, der sich koaxial in der Welle erstreckt.

2. Dosiereinrichtung nach Anspruch 1, dadurch gekennzeichnet, daß der Körper (50) auf die Welle (62) aufgekeilt ist, die den koaxialen Kanal (64) aufweist, der in bezug zu dem radialen Kanal (60) des Körpers seitlich von der Welle mündet und dadurch, daß die Welle mit einem Steuernocken (92) für eine Einrichtung versehen ist, die dazu bestimmt ist, das verdichtete Gas in den koaxialen und den radialen Kanal zu leiten.

3. Dosiereinrichtung nach Anspruch 1, dadurch gekennzeichnet, daß der Körper (102) drehbar auf der Welle (118) angeordnet ist, die ortsfest ist und mit dem koaxialen Kanal (122) versehen ist, der seitlich so mündet, daß bei jeder Drehung des Körpers der koaxiale Kanal mit dem radialen Kanal (116) des Körpers in Verbindung kommt.

4. Dosiereinrichtung nach einem der Ansprüche 1 bis 3, dadurch gekennzeichnet, daß eine Einrichtung (70) zur Schnellbefestigung des Körpers an der Welle (62, 118) vorgesehen ist, so daß verschiedene Körper mit Ausnehmungen (58, 114) verschiedener Abmessungen schnell auf der Welle montierbar sind.

5. Dosiereinrichtung nach einem der Ansprüche 1 bis 4, dadurch gekennzeichnet, daß ein Verschluß (80) vorgesehen ist, der zwischen zwei Stellungen beweglich ist, von denen er in einer die Verbindung zwischen der Ausnehmung (58) des Körpers (56) und der Ausgabeöffnung herstellt und in der anderen diese Verbindung unterbindet.

6. Knet- und Dosierbacktrog, gekennzeichnet dadurch, daß er mit einer Dosiereinrichtung nach Anspruch 5 versehen ist und dadurch, daß die Teigausgabeeinrichtung von einem mechanischen Back- oder Knettrog gebildet wird, der folgende Merkmale aufweist:

— einen festen Trog (13), der geeignet ist, dicht abgeschlossen zu werden und der eine Eintrittsöffnung (52) für ein verdichtetes Gas aufweist,
— einen drehbaren Trog (22), der innerhalb des festen Troges (13) angeordnet ist und eine Ausgabeöffnung besitzt,
— einen Rührarm (30) und
— eine Antriebseinrichtung (24, 32), mit der der drehbare Trog und der Rührarm unabhängig voneinander gedreht werden können.

**Claims**

1. Weigher intended for delivering a pasty material in masses of the same size, said weigher comprising:

— a rotor (56; 102) mounted on a shaft (62; 118) and having a surface of revolution in which opens out at least one cavity (58; 114) of volume corresponding to the volume desired for each mass,
— a drive device intended for rotating the rotor (56; 102) about the axis of revolution of the said shaft (62; 118),
— a paste distributor (13; 106) having a distribution orifice adjacent the surface of revolution of the rotor (56; 102) and placed so that, upon each revolution of the rotor, said cavity (58; 114) communicates with the distribution orifice, said rotor (56; 102) comprising at least one radial channel (60; 116) for passage of a gas under pressure in the direction of the cavity, so that the mass contained in said cavity is ejected, characterized in that the rotor (56; 102) is composed of a body provided with the said cavity (58; 114) and removably mounted on the said shaft (62; 118), said radial channel (60; 116) being made in said body and opening on the one hand in that part of the cavity which is the most remote from the surface of revolution and communicating at least sequentially on the other hand with a channel (64; 122) extending coaxially to the said shaft.

2. Weigher according to Claim 1, characterized in that the said body (50) is fixed on said shaft (62) which comprises said coaxial channel (64) opening laterally of said shaft opposite the radial channel (60) of the body and in that the said shaft bears a cam (92) for controlling a device intended for transmitting the compressed gas into said coaxial channel and into said vertical channel.

3. Weigher according to Claim 1, characterized in that the said body (102) is mounted in rotation on the shaft (118) which is fixed and which comprises the coaxial channel (122) which opens laterally so that, upon each revolution of the body, this coaxial channel communicates with said radial channel (116) of the body.

4. Weigher according to any one of Claims 1 to 3, characterized in that it comprises a device (70) for rapidly fixing the body with respect to the shaft (62; 118) so that different bodies having cavities (58; 118) of different dimensions may be rapidly mounted on said shaft.

5. Weigher according to any one of Claims 1 to 4, characterized in that it comprises an obturator (80) mobile between two positions in one of which it allows communication between the cavity (58) of the body (56) and the distribution orifice and in the other of which it prevents this communication.

6. Kneader-mixer-weigher, characterized in that it comprises a weigher according to Claim 5, the paste or dough distributor being formed by a kneader or mechanical mixer which comprises:

— a fixed vessel (13) adapted to be hermetically closed and comprising a compressed gas intake (52),
— a rotating vessel (22) disposed in the fixed vessel (13) and having a distribution orifice,
— a rotatable arm (30) for mixing, and
— a drive device (24, 32) intended for rotating the rotating vessel and the mixing arm independently of each other.

Fig. 1

_Fig.2_

Fig.4

Fig.3

0 030 481

*Fig.*5